# EUROPÄISCHE PATENTSCHRIFT

(11) **EP 1 621 686 B1**
(45) Veröffentlichungstag und Bekanntmachung des Hinweises auf die Patenterteilung: **19.03.2008**
(21) Anmeldenummer: 05015939.1
(22) Anmeldetag: 22.07.2005
(51) Int. Cl.: E03C 1/04, F16K 11/078

(54) **Mischbatterie**
Mixing valve
Robinet mélangeur

(30) Priorität: 22.07.2004 DE 102004035651
(43) Veröffentlichungstag der Anmeldung: 01.02.2006
(73) Patentinhaber: COMET-Pumpen Systemtechnik GmbH & Co. KG, 37308 Pfaffschwende (DE)
(72) Erfinder: Bachmann, Peter, 37269 Eschwege (DE); Henning, Karl-Heinz, 37308 Pfaffschwende (DE); Kaufhold, Michael, 37308 Pfaffschwende (DE)
(74) Vertreter: Lins, Edgar

(56) Entgegenhaltungen:
- EP-A- 0 100 062
- DE-A1- 19 756 972
- US-A- 4 576 202
- US-A- 6 154 897

## Beschreibung

Die Erfindung betrifft einen Wasserhahn zum Einbau in eine in einer Montageplatte befindlichen Montageöffnung, mit einem Gehäuse, das ein in Einbaustellung oberhalb der Montageplatte befindliches Gehäuseteil und einen durch die Montageplatte hindurchragenden Befestigungsstutzen aufweist, durch den wenigstens eine Zuführungsleitung hindurchführbar ist, mit einem in das Gehäuseteil eingesetzten Steuerzylinder zum Steuern einer zu einem Auslauf geführten Wassermenge und mit einem Betätigungsorgan, das mit einem Betätigungselement des Steuerzylinders verbindbar ist, wobei das Gehäuseteil mit einem äußeren Zylinder und einer in den äußeren Zylinder lösbar eingesetzten Steuerbuchse, die den Steuerzylinder trägt, aufgebaut ist und der äußere Zylinder einstückig mit dem Befestigungsstutzen ausgebildet ist.

Die Erfindung betrifft insbesondere einen Wasserhahn, der in einen Wohnwagen, ein Wohnmobil, ein Wohnboot o. dgl. eingebaut werden soll. Die Erfindung betrifft somit insbesondere einen aus Kunststoff hergestellten Wasserhahn.

Wasserhähne der genannten Art sind insbesondere als Einhebel-Mischbatterien bekannt. Ihnen wird warmes und kaltes Wasser über die Zuführungsleitungen zugeführt. Durch Kippen des Betätigungshebels des Deckelteils wird der gemischte Wasserstrom geregelt, während durch Drehung des Deckelteils um eine Hochachse das Mischungsverhältnis zwischen kaltem und warmen Wasser einstellbar ist.

Für derartige Wasserhähne sind Steuerzylinder bekannt, die in einer Stirnseite zwei Einlauföffnungen und eine Auslauföffnung aufweisen. Hinter den Einlauföffnungen befindet sich ein Mischorgan mit einer Mischöffnung, die in Abhängigkeit von der Kippstellung eines Betätigungselements des Steuerzylinders mit den Einlauföffnungen kommuniziert, wobei der Überdeckungsanteil mit der einen oder anderen Einlauföffnung durch die Drehung des Betätigungselements um die Hochachse festgelegt wird. Aus der Mischkammer heraus wird das gemischte Wasser in die neben den Einlauföffnungen angeordnete Auslauföffnung des Steuerzylinders zurückgeleitet.

Das Gehäuse eines mit einem derartigen Steuerzylinder arbeitenden Wasserhahns muss somit Zuleitungen und einen Auslauf aufweisen, die mit den entsprechenden stirnseitigen Öffnungen des Steuerzylinders kommunizieren können. Der Aufbau eines derartigen Gehäuses gestaltet sich relativ kompliziert und erfolgt regelmäßig mit einem fest am Gehäuse angeordneten Auslaufteil.

In einer einfacheren Ausführungsform des Wasserhahns kann auf die Mischfunktion verzichtet werden, wenn der Steuerzylinder einen lediglich zur Steuerung der Auslaufmenge des über eine Zuführungsleitung zugeführten Wassers ausgebildet ist.

Ein Wasserhahn der eingangs erwähnten Art ist durch US 4,576,202 bekannt. Das Gehäuse des Wasserhahns ist durch einen nach oben offenen Zylinder gebildet, der an seiner Unterseite in den Befestigungsstutzen übergeht. In die Unterseite des Gehäuses münden zwei Zuführungsleitungen. Die Mischung findet mit aufeinander gleitenden Scheiben statt, von denen eine ortsfest angeordnet ist, während die andere mittels eines Betätigungshebels in ihrer Ebene translatorisch und rotatorisch bewegbar ist. Der Betätigungshebel ist mit einem starren Ansatz versehen, der einen als Kugel ausgebildeten Abschnitt aufweist, der in einem Kugellager in dem Gehäuse gelagert ist. Hierzu ragt der Ansatz durch den Deckel des Gehäuses. Inseits der gelagerten Kugel befindet sich ein Endstück des Ansatzes, das mit einem Steuerkopf verbunden ist, der die translatorische Bewegung der bewegbaren Scheibe bewirkt, wenn der Betätigungshebel aus seiner Ausgangslage nach oben gekippt wird. Wird der Hebel in dieser Stellung gedreht, bewegt sich die bewegbare Scheibe rotatorisch. Durch eine geeignete Anordnung von Durchgangsöffnungen in den beiden Schreiben kann so eine beliebige Mischung der zufließenden Wasserströme erzielt werden. In der Innenwandung des Gehäuses befindet sich ein Ringkanal, der das Mischwasser aufnimmt und mit einem fest mit dem Gehäuse verbundenen Auslauf kommuniziert.

EP 0 100 062 A2 offenbart ein Eingriffmischventil, das in herkömmlicher Weise aufgebaut ist und insbesondere eine in das Ventilgehäuse eingelötete Buchse aufweist, in der sich ein Hohlkolben befindet. Die Wasserzuleitung erfolgt in dem Gehäuse radial auswärts von der eingelöteten Buchse und gelangt in einen die Mischung bewirkenden Hohlkolben innerhalb der Buchse über radiale Öffnungen.

Der vorliegenden Erfindung liegt die Aufgabe zugrunde, einen Wasserhahn der eingangs erwähnten Art so auszubilden, dass er in vereinfachter Weise aufgebaut werden kann.

Zur Lösung dieser Aufgabe ist ein Wasserhahn der eingangs erwähnten Art erfindungsgemäß dadurch gekennzeichnet, dass ein Ausgangs-Leitungsstück des Steuerzylinders in einen in der Außenwandung der Steuerbuchse ausgebildeten Ringraum mündet, dass die Steuerbuchse im Bereich des Ringraums nach radial außen von einem zylindrischen Auslaufteil umgeben ist und dass das Auslaufteil nach unten durch den äußeren Zylinder nach oben durch eine Klemmbuchse gehalten ist.

Die erfindungsgemäße Ausbildung des Wasserhahns hat den Vorteil, dass der äußere Zylinder mit dem Befestigungsstutzen in der Montgeplatte befestigbar ist und dass alle Funktionsteile des Wasserhahns aus dem äußeren Zylinder entnehmbar bzw. einsetzbar sind, ohne dass ein Ausbau des äußeren Zylinders mit dem Befestigungsstutzen aus der Montageplatte erfolgen müsste, wie dies bisher der Fall ist.

Bevorzugt weist der äußere Zylinder eine Zylinderachse auf, die mit einer Mittelachse des Befestigungsstutzen einen Winkel < 180° bildet. Auf diese Weise kann mit dem in die Montageplatte eingebauten Adapterteil, bestehend aus äußerem Zylinder und Befestigungsstutzen eine Schrägstellung des Wasserhahns realisiert werden. Die Schrägstellung gegenüber einer Senkrechten zur Montageplatte beträgt vorzugsweise zwischen 5 und 10°, sodass der Winkel zwischen der Zylinderachse des äußeren Zylinders und der Mittelachse des Befestigungsstutzens vorzugsweise zwischen 170° und 175° liegt.

Die lösbare Verbindung zwischen dem äußeren Zylinder und der Steuerbuchse kann beispielsweise durch eine Verschraubung erfolgen. Bevorzugt ist jedoch die Verbindung mit einer Bajonett-Führungsnut, in der ein Vorsprung geführt wird. Vorzugsweise ist die Bajonett-Führungsnut in der Innenwandung des äußeren Zylinders ausgebildet.

Um eine drehfeste Verbindung zwischen dem äußeren Zylinder und der Steuerbuchse herzustellen, können in die Mantelwandungen wenigstens jeweils eine Durchgangsbohrung eingebracht sein, sodass die Drehverriegelung mittels eines Bolzens möglich ist, wenn die Durchgangsbohrungen miteinander fluchten. Vorzugsweise sind jeweils zwei Durchgangsbohrungen vorgesehen. Der Bolzen kann dabei als Einschnappteil einstückig mit einem an die Außenwandung des äußeren Zylinders angepassten Anlagestücks ausgebildet sein. Das Anlagestück kann dabei eine Markenbezeichnung des Wasserhahns tragen, mit einer Markierung für die Verstellrichtung warm/kalt, insbesondere durch eine übliche blau/rote Farbgebung, versehen sein oder in anderer Weise genutzt werden.

Die Zuführungsleitungen, die durch den Befestigungsstutzen geführt werden, sind vorzugsweise an in der Steuerbuchse ausgebildeten Leitungsstücken anschließbar. Im Zusammenwirken mit einem Steuerzylinder der oben beschriebenen Art fluchten die Leitungsstücke der Steuerbuchse mit Einlauföffnungen des Steuerzylinders. Zur Herstellung eines abgedichteten Übergangs sind zwischen den Leitungsstücken und den Einlauföffnungen jeweils eine umgebende Dichtung, beispielsweise in Form eines O-Rings, vorgesehen die die von der Klemmbuchse ausgeübte Vorspannung aufnehmen.

Gemäß der Erfindung fluchtet eine axiale Ausgangsöffnung des Steuerzylinders mit dem Ausgangs-Leitungsstück der Steuerbuchse, das in den nach radial außen offenen Ringraum mündet. Dabei ist die Steuerbuchse im Bereich des Ringraums nach radial außen mit dem zylindrischen Auslaufteil mit einem Auslaufrohr umgeben. Es sind axial beidseitig vorn Ringraum Dichtungen zwischen der Steuerbuchse und dem Auslaufteil eingesetzt. Auf diese Weise gelingt es, das Auslaufteil drehbar an der Steuerbuchse zu lagern. Die Realisierung einer drehbaren Steuerbuchse gelingt somit auch bei einem gegenüber der Montageplatte schräg gestellten Gehäuseteil.

Bevorzugt ist bei dem erfindungsgemäßen Wasserhahn eine Klemmbuchse vorgesehen, die axial relativ zu dem Gehäuseteil verstellbar ist, sodass mit der Klemmbuchse eine axiale Vorspannung auf den Steuerzylinder mittels einer Drehbewegung ausgeübt werden kann. Zur Vermeidung eines Lösens der Vorspannung durch eine ungewollte Rückdrehung der Klemmbuchse ist diese mit einem radial erstreckten Flanschabschnitt versehen, der an dem Gehäuseteil anliegt und über wenigstens eine Durchtrittsöffnung des Flanschabschnitts mit dem Gehäuse drehfest verbindbar ist, indem ein Bolzen, beispielsweise das Gewindeteil einer Schraube, durch die Durchtrittsöffnung hindurchragt, wobei vorzugsweise das Gehäuseteil eine entsprechende Aufnahmeöffnung aufweist.

In der bevorzugten Ausführungsform der Erfindung ist der Wasserhahn mit einer Mischfunktion versehen, also der Steuerzylinder zur Mischung von über wenigstens zwei Zuführungsleitungen zugeführte Wasserströme ausgebildet. Dabei ist es zweckmäßig, wenn die Steuerbuchse in den äußeren Zylinder lösbar, aber axial und drehfest gesichert eingesetzt ist.

Das vorzugsweise drehbar gelagerte Auslaufteil ist erfindungsgemäß in einfacher Weise axial von dem äußeren Zylinder einerseits und der Klemmbuchse andererseits begrenzt. Dabei ist es bevorzugt, dass das zylindrische Außenteil, der äußere Zylinder und die Klemmbuchse miteinander fluchtende Außenwandungen aufweist, wodurch sich ein ästhetisch einwandfreies Erscheinungsbild des erfindungsgemäßen Wasserhahns ergibt.

Die die axiale Vorspannung erzeugende Verbindung zwischen Klemmbuchse und Steuerbuchse kann durch ein Gewinde, aber auch durch eine Bajonettverbindung realisiert sein.

Erhebliche Montagevorteile ergeben sich bei dem erfindungsgemäßen Wasserhahn daraus, dass die Klemmbuchse aus einem Buchsenteil mit radial nach innen ragenden Mitnehmern und einem inneren Ringstück mit nach radial außen zeigenden Stegen gebildet ist und dass das Ringstück einen zylindrischen Ansatz des Steuerzylinders umfasst und mit seinen Stegen die Mitnehmer axial dem Steuerzylinder benachbart untergreift. Die Klemmwirkung wird somit von dem Buchsenteil über die Mitnehmer und die Stege auf das innere Ringstück übertragen, das am Steuerzylinder anliegt und so die Vorspannung auf den Steuerzylinder ausübt. Damit insbesondere bei der Drehbewegung eine Mitnahme der Stege des inneren Ringstücks gesichert ist, können die Stege eine dachartig geformte axiale Oberfläche aufweisen, die mit einer komplementär geformten axialen Oberfläche der Mitnehmer zusammenwirkt.

Aus optischen Gründen ist es zweckmäßig, wenn auf das Klemmteil ein eine kugelabschnittförmige Oberfläche aufweisendes Kalottenteil aufsetzbar ist. Für eine drehfeste Verbindung ist das Kalottenteil mit Innenrippen versehen, die wenigstens einen nach radial innen zeigenden Vorsprung des Klemmteils beidseitig begrenzen. Der nach innen zeigende Vorsprung des Klemmteils kann dabei durch einen der Mitnehmer gebildet sein.

Der Abschluss des Wasserhahns nach oben wird durch das Deckelteil gebildet, das vorzugsweise mit dem Betätigungselement des Steuerzylinders mittels einer in das Betätigungselement eingeschraubten Schraube verbunden ist. Die Schraube kann dabei vorzugsweise in eine Ausnehmung des Deckelteils eingesetzt sein, das mit einem Einsatzstück verschließbar ausgebildet sein kann. Vorzugsweise fluchtet das Einsatzstück mit dem Betätigungshebel und weist zwei durch eine Längsachse des Betätigungshebels getrennte optisch unterschiedliche Bereiche auf, die beispielsweise rot und blau gefärbt sein können, um die Bewegungsrichtung des Betätigungshebels in Richtung "warm" und in Richtung "kalt" zu kennzeichnen.

In einer besonders zweckmäßigen Ausführungsform ist das Einsatzteil zweistückig aus die unterschiedlichen Bereiche ausbildenden Einsatzstücken gebildet, wobei die Einsatzstücke formschlüssig zu dem Einsatzteil zusammensteckbar ausgebildet sein können.

In einer bevorzugten Ausführungsform der Erfindung wird die Formgebung des Betätigungshebels in Form eines auf der Oberfläche des Deckelteils ausgebildeten Wulstes fortgesetzt, sodass das Einsatzteil die Form des Wulstes fortsetzt.

Für die Verwendung des erfindungsgemäßen Wasserhahns im Campingbereich, also für einen Anschluss des Wasserhahns an einen nicht unter Druck stehenden Wasservorrat ist es vorteilhaft, die Betätigung des Wasserhahns mit einem elektrischen Schalter zu verbinden, der beim Öffnen des Wasserhahns eine Pumpe betätigt. Ein derartiger elektrischer Schalter ist bei dem erfindungsgemäßen Wasserhahn vorzugsweise an dem Deckelteil befestigt. Die für den Schalter benötigte elektrische Leitung kann von dem elektrischen Schalter aus durch eine in der Steuerbuchse vorgesehene Durchführung zwischen Steuerbuchse und Steuerzylinder und durch das Befestigungsstück hindurchgeführt werden.

Die Erfindung soll im Folgenden anhand eines in der Zeichnung dargestellten Ausführungsbeispielen näher erläutert werden. Es zeigen:
- Figur 1 -: eine perspektivische Darstellung der für den erfindungsgemäßen Wasserhahn benötigten Einzelteile;
- Figur 2 -: eine Aufreihung der in Figur 1 dargestellten Einzelteile in der Reihenfotge des Zusammenbaus, dargestellt in einer Schnittdarstellung;
- Figur 3 -: eine Schnittdarstellung des zusammengebauten Wasserhahns.

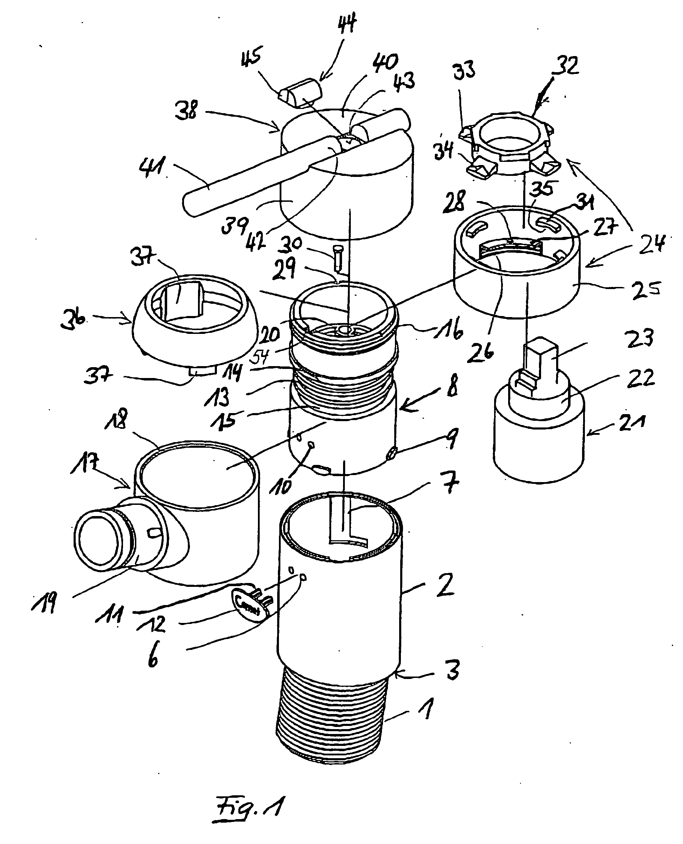

Figur 1 lässt einen Befestigungsstutzen 1 erkennen, der im montierten Zustand durch eine Montageöffnung einer (nicht dargestellten) Montageplatte ragt. Der Befestigungsstutzen weist ein Außengewinde auf, auf das eine Ringmutter aufschraubbar ist und einen durch einen äußeren Zylinder 2 gebildeten Absatz 3 auf die Oberseite der Montageplatte ringförmig um die Montageöffnung herum zieht.

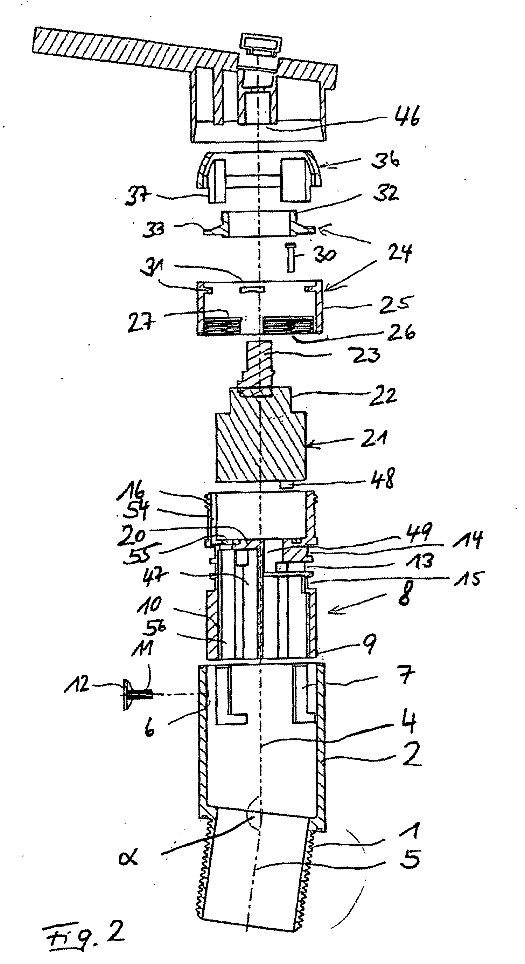

Der Befestigungsstutzen 1 steht winkelig zum äußeren Zylinder 2 derart, dass die Zylinderachse 4 des äußeren Zylinders 2 mit einer Mittenachse 5 des Befestigungsstutzens 1 einen Winkel α bildet, der zwischen 170° und 175° liegt (Figur 2).

In der Mantelwandung des äußeren Zylinders 2 befinden sich zwei Durchgangslöcher 6. In der Innenwandung des äußeren Zylinders 2 sind Bajonett-Führungsnuten 7 ausgebildet, die eine L-Form aufweisen, wobei ein längerer und breiterer axialer Abschnitt in einen in der Umfangswand radial verlaufenden Abschnitt übergeht. Figur 1 lässt erkennen, dass vier derartige Bajonett-Führungsnuten vorgesehen sind, die über den Umfang gleichmäßig verteilt sind, also einen Umfangswinkel von 90° zwischen sich bilden.

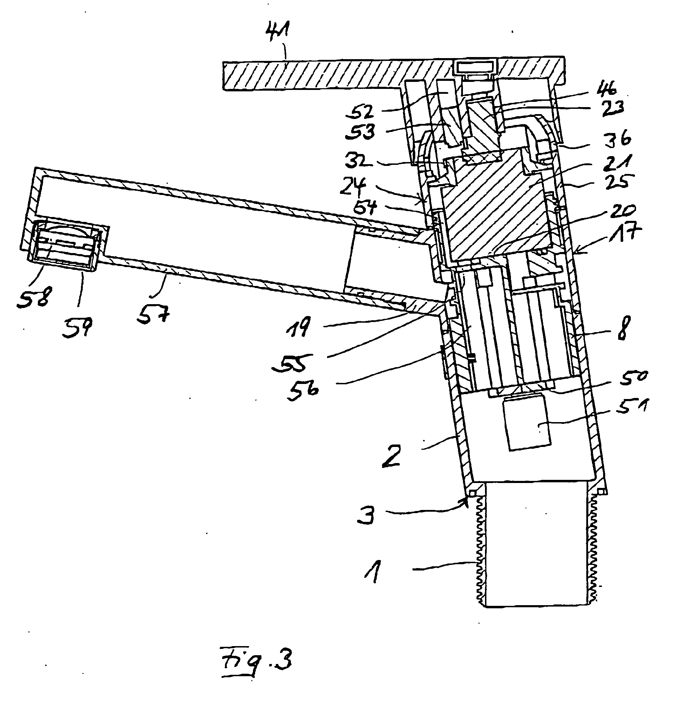

Figur 3 lässt erkennen, dass im montierten Zustand der Befestigungsstutzen 1 senkrecht zu dem Absatz 3, also senkrecht zu der Montageplatte steht und dass somit der äußere Zylinder 2 einen Winkel (180° - α) mit der Senkrechten auf der Montageplatte bildet.

Über die Bajonett-Führungsnuten 7 ist mit dem äußeren Zylinder 2 eine Steuerbuchse 8 verbindbar. Hierzu weist die (ebenso wie der äußere Zylinder 2) einen kreiszylindrischen Querschnitt bildende Steuerbuchse 8 einen Außendurchmesser auf, der dem Innendurchmesser der Wandung des äußeren Zylinders 2 entspricht. Am unteren Ende ist die Steuerbuchse 8 mit vier Vorsprüngen 9 versehen, deren Breite der Breite des axialen Abschnitts der Bajonett-Führungsnut 7 und deren Höhe der Breite des Umfangsabschnitts der Bajonett-Führungsnut 7 entspricht.

In der Mantelwandung der Steuerbuchse 8 befinden sich ebenfalls zwei Durchgangslöcher 10, die so ausgebildet und angeordnet sind, dass sie mit den Durchgangslöchern 6 des äußeren Zylinders 2 fluchten, wenn die Verbindung über die Bajonett-Führungsnuten 7 und die Vorsprünge 9 zwischen Steuerbuchse 8 und äußerem Zylinder 2 hergestellt ist. Durch die miteinander fluchtenden Durchgangslöcher 6, 10 ist ein mit zwei federnden Rastbolzen 11 versehenes Anlageteil steckbar, das an die Krümmung der Mantelwandung des äußeren Zylinders 2 angepasst ist und somit sauber an der Mantelwandung anliegen kann, um die Durchgangslöcher 6 zu verdecken. Das Anlageteil ist im dargestellten Ausführungsbeispiel mit einer Marke zur Charakterisierung der Herkunft des Wasserhahns versehen.

Die Außenwandung der Steuerbuchse 8 ist auf etwa mittlere Höhe mit einem nach radial außen offenen umlaufenden Ringraum 13 versehen, zu dem parallel eine obere Ringnut 14 und eine untere Ringnut 15 umläuft. Die Ringnuten 14, 15 dienen der Aufnahme von Ringdichtungen.

Am oberen Ende weist die Steuerbuchse 8 ein Außengewinde 16 auf.

Über die Steuerbuchse 8 ist ein Auslaufteil 17 schiebbar, das aus einem zylindrischen Rohrstück 18 und einem sich an eine Mantelöffnung des zylindrischen Rohrstücks seitlich anschließenden Rohransatz 19 besteht. Das Auslaufteil 17 weist einen Innendurchmesser auf, der dem Außendurchmesser der Steuerbuchse 8 entspricht. Der Außendurchmesser des zylindrischen Rohrstücks 18 entspricht dem Außendurchmesser des äußeren Zylinders 2.

Die Steuerbuchse 8 weist oberhalb des Ringraums 13 einen eingesetzten Boden 20 auf, auf den ein Steuerzylinder 21 aufsetzbar ist. Der Steuerzylinder 21 weist an seiner Oberseite einen abgesetzten zylindrischen Ansatz 22 auf, aus dessen stirnseitigem freien Ende ein rechteckiges Betätigungselement 23 herausragt. Das Betätigungselement 23 ist um eine Hochachse drehbar und um eine horizontale Drehachse schwenkbar.

Der in die Steuerbuchse 8 eingesetzte Steuerzylinder 21 ist mittels einer Klemmbuchse 24 mit axialer Vorspannung gegen den Boden 20 der Steuerbuchse 8 drückbar. Hierzu besteht die Klemmbuchse 24 aus einem zylindrischen Buchsenteil 25, das am unteren Ende mit Innengewindeabschnitten 26 versehen ist, durch die die Klemmbuchse 24 auf das Außengewinde 16 der Steuerbuchse 8 aufschraubbar ist. Oberhalb der Innengewindeabschnitte befinden sich radial nach innen ragende Flanschabschnitte 27 an der Innenwandung des Buchsenteils 25. Einer der Flanschabschnitte 27 ist mit einer Durchgangsöffnung 28 versehen, die im aufgeschraubten Zustand mit einer nach radial außen offenen Nut 29 am oberen Rand der Steuerbuchse 8 fluchtet, sodass ein durch die Durchgangsöffnung 28 hindurch gesteckter Bolzen 30 in die Nut 29 ragt und eine drehfeste Verbindung zwischen Steuerbuchse 8 und Klemmbuchse 24 herstellt.

Am oberen Rand der Innenwandung des Buchsenteils 25 der Klemmbuchse 24 befinden sich vier gleichmäßig über den Umfang verteilte Mitnehmer 31.

Die Klemmbuchse 24 wird vervollständigt durch ein inneres Ringstück 32, dessen Innendurchmesser dem Außendurchmesser des zylindrischen Ansatzes 22 des Steuerzylinders 21 entspricht. Das innere Ringstück 32 weist viel nach radial außen ragende Stege 33 auf, deren Länge bis zu einem Außendurchmesser reicht, der dem Innendurchmesser des Buchsenteils 25 entspricht. Das innere Ringstück 32 ist in das Buchsenteil 25 einsetzbar, und zwar derart, dass die Stege 33 unter den Mitnehmern 31 zu liegen kommen. Im montierten Zustand sollen die Stege 33 genau unter den Mitnehmern 31 liegen. Als Zentrierungshilfe sind die Stege 33 mit einer dachförmigen Oberseite 34 ausgebildet. Dementsprechend weisen die Mitnehmer 31 eine der Dachform 34 entsprechende komplementäre Unterseite 35 auf.

Auf die Klemmbuchse 24 ist ein Kalottenteil 36 aufsteckbar. Hierzu weist das Kalottenteil 36 vier axial nach unten gerichtete Stege 37 auf, deren Außenwände einem Außendurchmesser entsprechen, der dem Innendurchmesser des Buchsenteils 25 der Klemmbuchse 24 entspricht. Wenigstens zwei der Stege 37 bilden einen Zwischenraum, dessen Breite der Breite eines der Stege 33 des inneren Ringstücks 32 gleicht. Auf diese Weise ist das Kalottenteil 36 drehfest mit der Klemmbuchse 24 verbunden. Das Kalottenteil 36 weist eine kugelabschnittförmige und ringförmige Wandung auf, die somit nach oben hin offen ist.

Der Wasserhahn wird an seiner Oberseite abgedeckt durch ein Deckelteil 38, das durch eine zylindrische Mantelwandung 39 und einer die Mantelwandung 39 abschließende schrägen Stirnwand 40 sowie durch einen Betätigungshebel 41 gebildet ist. Die schräge der Stirnwand 40 entspricht der Schräge des äußeren Zylinders 2 bezogen auf den Absatz 3 derart, dass das Deckelteil im geschlossenen Zustand des Wasserhahns eine parallel zum Absatz 3 (zur Montageplatte) verlaufende Oberseite und einen entsprechend ausgerichteten Betätigungshebel 41 aufweist, wie dies Figur 3 verdeutlicht.

Der Betätigungshebel 41 ist mit einem kreiszylindrischen Querschnitt ausgebildet und erstreckt sich bis zu der zylindrischen Mantelwandung 39. Auf der Oberseite der Stirnwand 40 setzt sich der Betätigungshebel 41 optisch als halbkreisförmiger Wulst 42 fort.

In dem halbkreisförmigen Wulst 42 befindet sich eine Ausnehmung 43, in die ein Einsatzteil 44 einsetzbar ist. Das Einsatzteil 44 besteht aus zwei Einsatzteilen 45, die zu dem Einsatzstück 44 zusammengesteckt sind und eine der Form des Wulstes 42 entsprechende Oberseite bilden.

Die Ausnehmung 43 dient zur Aufnahme einer (nicht dargestellten) Befestigungsschraube, die in das Betätigungselement 23 des Steuerzylinders 21 einschraubbar ist. Durch Anheben des Betätigungshebels 41 kann somit das Betätigungselement 23 gekippt werden. Hierdurch wird der Volumenstrom des Wasserhahns geregelt.

Das Deckelteil 40 ist im Innenraum mit einer viereckigen, nach unten offenen Kammer 46 versehen, die so ausgebildet ist, dass sie das viereckige Betätigungselement 23 übergreift, wenn die Schraubverbindung zwischen Deckelteil 40 und Betätigungselement 23 des Steuerzylinders 21 hergestellt wird. Auf diese Weise ist der Betätigungshebel 41 drehfest mit dem Betätigungselement 23 verbunden. Durch eine Drehung des Deckelteils 40 aufgrund der Drehung des Betätigungshebels 41 kann somit der Mischvorgang in dem Steuerzylinder 21 eingestellt werden.

Die beiden Einsatzstücke 45 des Einsatzteils 44 sind vorzugsweise optisch unterschiedlich ausgebildet, wobei sinnvollerweise das eine Einsatzstück 45 blau und das andere Einsatzstück rot eingefärbt ist. Da die Einsatzstücke 45 in Längsrichtung des Betätigungshebels 41 geteilt sind, gibt die rote Seite die Drehrichtung des Betätigungshebels für wärmeres Wasser und die blaue Seite die Drehrichtung des Betätigungshebels für kälteres Wasser an.

Figur 2 lässt erkennen, dass die mit Hilfe der Ansätze 9 und der Bajonett-Führungsnuten 7 in den äußeren Zylinder 2 einsetzbare Steuerbuchse 8 Zuführungs-Leitungsstücke 47 ausbildet, die zum Boden 20 führen. Über den Boden 20 findet eine Verbindung zu entsprechenden Einlauföffnungen auf der stirnseitigen Unterseite des Steuerzylinders 21 statt. Aus der Unterseite des Steuerzylinders 21 ragen zwei Zentrierbolzen 48 heraus, die mit entsprechenden Zentrierausnehmungen im Boden 20 der Steuerbuchse 8 für einen verdrehsicheren Einsatz des Steuerzylinders 21 in die Steuerbuchse 8 zusammenwirken. Dadurch ist sichergestellt, dass eine Flüssigkeitsverbindung zwischen den zugehörigen Leitungsstücken 47 und entsprechenden Eingangsöffnungen des Steuerzylinders 21 hergestellt wird.

Die Steuerbuchse weist im Boden ein Ausgangs-Leitungsstück 49 auf, das in den mittleren Ringraum 13 einmündet. Die in die den Ringraum 13 oben und unten begrenzenden Ringnuten 14, 15 eingesetzten Ringdichtungen dichten den Ringraum 13 nach oben und unten ab, wenn (wie in Figur 2 nicht dargestellt ist) das Auslaufteil 17 über die Steuerbuchse 8 im Bereich des Ringraums 13 geschoben wird.

Figur 3 verdeutlicht in einer Schnittdarstellung den fertig montierten erfindungsgemäßen Wasserhahn. Demgemäß steht der Befestigungsstutzen 1 in seiner Einbauposition, nämlich senkrecht zu dem Ansatz 3, also senkrecht zur Montageplatte. Der äußere Zylinder 2 ist demgemäß nach vorn (zur Auslaufseite) des Wasserhahns geneigt. An die Unterseite der Steuerbuchse 8 ist eine Anschlussplatte 50 mit zwei Schlauchanschlüssen 51 geschraubt, von denen in Figur 3 wegen der Schnittdarstellung nur einer erkennbar ist.

Figur 3 verdeutlicht, dass das Auslaufteil 17 drehbar auf die Steuerbuchse 8 aufgesetzt ist und nach unten durch den äußeren Zylinder 2 und nach oben durch die Klemmbuchse 24 begrenzt und gehalten ist.

Figur 3 zeigt ferner ergänzend, dass in eine nach unten offene Montagekammer 52 ein elektrischer Schalter 53 eingesetzt ist, dessen (in Figur 3 wegen der Schnittdarstellung nicht zu erkennender) Betätigungsvorsprung auf die Oberseite des Steuerzylinders 21 so weit ragt, dass der Schalter als Ausschalter betätigt ist. Erst wenn der Betätigungshebel 41 nach oben geschwenkt wird, um den Wasserhahn zu öffnen, wird der Stromkreis über den Schalter 53 geschlossen, um eine Wasserpumpe zur Förderung von Wasser aus einem Vorratsbehälter durch den Wasserhahn zu betätigen.

Figur 3 lässt in der Innenwandung der Steuerbuchse 8 im Bereich des Steuerzylinders 21 eine axial nach unten verlaufende Nut 54 erkennen, durch die eine mit dem elektrischen Schalter 53 verbundene Leitung zu einer Durchgangsöffnung 55 im Boden 20 hindurchgeführt wird, um in einem entsprechenden Kanal 56 der Steuerbuchse 8 in den offenen Raum des äußeren Zylinders 2 und des Befestigungsstutzens 1 zur Unterseite der Montageplatte geführt zu werden, wo die elektrische Verbindung mit der Pumpe hergestellt werden kann. Die Ausbildung der Nut 54 ist auch auf der Innenwandung der Steuerbuchse 8 in den Figuren 1 und 2 erkennbar. Figur 2 verdeutlicht, dass die Ausrichtung der Klemmbuchse 24 so erfolgen muss, dass ein Zwischenraum zwischen den Gewindeabschnitten 26 mit der Nut 54 fluchtet, damit die elektrische Leitung durch die Klemmbuchse 24 zur Nut 54 hin verlegbar ist.

Figur 3 zeigt ergänzend noch einen Wasserauslauf 57, der auf dem Rohransatz 19 befestigt ist und eine mit einem Auslaufsieb 58 versehene Auslauföffnung 59 aufweist.

## Patentansprüche

1. Wasserhahn zum Einbau in eine in einer Montageplatte befindlichen Montageöffnung, mit einem Gehäuse, das ein in Einbaustellung oberhalb der Montageplatte befindliches Gehäuseteil und einen durch die Montageplatte hindurchragenden Befestigungsstutzen (1) aufweist, durch den wenigstens eine Zuführungsleitung hindurchführbar ist, mit einem in das Gehäuseteil eingesetzten Steuerzylinder (21) zum Steuern einer zu einem Auslauf (57) geführten Wassermenge und mit einem Betätigungsorgan (41), das mit einem Betätigungselement (23) des Steuerzylinders (21) verbindbar ist, wobei das Gehäuseteil mit einem äußeren Zylinder (2) und einer in den äußeren Zylinder (2) lösbar eingesetzten Steuerbuchse (8), die den Steuerzylinder (21) trägt, aufgebaut ist und der äußere Zylinder (2) einstückig mit dem Befestigungsstutzen (1) ausgebildet ist, **dadurch gekennzeichnet, dass** eine axiale Ausgangsöffnung des Steuerzylinders (21) mit einem Ausgangs-Leitungsstück (49) der Steuerbuchse (8) fluchtet, wobei das Ausgangs-Leitungsstück (49) des Steuerzylinders (21) in einen in der Außenwandung der Steuerbuchse (8) ausgebildeten Ringraum (13) mündet, dass die Steuerbuchse (8) im Bereich des Ringraums (13) nach radial außen von einem zylindrischen Auslaufteil (17) mit einem Auslaufrohr umgeben ist und axial beidseitig von Ringraum (13) Dichtungen zwischen der Steuerbuchse (8) und dem Auslaufteil (17) eingesetzt sind, und dass das Auslaufteil (17) nach unten durch den äußeren Zylinder (2) und nach oben durch eine Klemmbuchse (24) gehalten ist.

2. Wasserhahn nach Anspruch 1, **dadurch gekennzeichnet, dass** der äußere Zylinder (2) eine Zylinderachse (4) aufweist, die mit einer Mittelachse (5) des Befestigungsstutzens (1) einen Winkel α < 180° bildet.

3. Wasserhahn nach Anspruch 2, **dadurch gekennzeichnet, dass** der Winkel α zwischen 170° und 175° liegt.

4. Wasserhahn nach einem der Ansprüche 1 bis 3, **dadurch gekennzeichnet, dass** der Steuerzylinder (21) ferner zum Mischen von über wenigstens zwei Zuführungsleitungen zugeführten Wasserströmen ausgebildet ist und dass die Steuerbuchse (8) axial und drehfest gesichert in den äußeren Zylinder (2) eingesetzt ist.

5. Wasserhahn nach einem der Ansprüche 1 bis 4, **dadurch gekennzeichnet, dass** die Verbindung zwischen dem äußeren Zylinder (2) und der Steuerbuchse (8) mittels wenigstens einem mit einer Bajonett-Führungsnut (7) zusammenwirkenden Vorsprung (9) erfolgt.

6. Wasserhahn nach Anspruch 5, **dadurch gekennzeichnet, dass** die wenigstens eine Bajonett-Führungsnut (7) in der Innenwandung des äußeren Zylinders (2) ausgebildet ist.

7. Wasserhahn nach einem der Ansprüche 1 bis 6, **dadurch gekennzeichnet, dass** zur drehsicheren Verbindung zwischen dem äußeren Zylinder (2) und der Steuerbuchse (8) in Mantelwandungen des äußeren Zylinders (2) und der Steuerbuchse (8) wenigstens jeweils eine Durchgangsbohrung (6, 10) eingebracht ist, die in miteinander fluchtender Stellung mittels wenigstens eines eingesetzten Bolzens (11) verriegelbar sind.

8. Wasserhahn nach Anspruch 7, **dadurch gekennzeichnet, dass** der Bolzen (11) als Einschnappteil einstückig mit einem an die Außenwand des äußeren Zylinders (2) angepassten Anlagestücks (12) ausgebildet ist.

9. Wasserhahn nach einem der Ansprüche 1 bis 8, **dadurch gekennzeichnet**, das in der Steuerbuchse (8) Leitungsstücke (47) zum Anschluss an die Zuführungsleitungen ausgebildet sind.

10. Wasserhahn nach Anspruch 9, **dadurch gekennzeichnet, dass** die Leitungsstücke (47) der Steuerbuchse (8) mit Einlauföffnungen des Steuerzylinders (21) axial fluchten.

11. Wasserhahn nach Anspruch 10, **dadurch gekennzeichnet, dass** zwischen den Leitungsstücken (47) und den Einlauföffnungen jeweils eine umgebende Dichtung vorgesehen ist, die eine von der Klemmbuchse (24) ausgeübte Vorspannung aufnimmt.

12. Wasserhahn nach Anspruch 1, **dadurch gekennzeichnet, dass** das Auslaufteil (17) drehbar an der Steuerbuchse (8) gelagert ist.

13. Wasserhahn nach einem der Ansprüche 1 bis 12, **dadurch gekennzeichnet, dass** die Klemmbuchse (24) zur Ausübung einer axialen Vorspannung auf den Steuerzylinder (21) mittels einer Drehbewegung ausgebildet ist.

14. Wasserhahn nach Anspruch 13, **dadurch gekennzeichnet, dass** die Klemmbuchse (24) mit einem radial erstreckten Flanschabschnitt (27) an dem Gehäuseteil anliegt und über wenigstens eine Durchtrittsöffnung (28) des Flanschabschnitts (27) mittels eines Bolzens (30) mit dem Gehäuseteil drehfest verbindbar ist.

15. Wasserhahn nach Anspruch 13 oder 14, **dadurch gekennzeichnet, dass** das Auslaufteil (17) axial von dem äußeren Zylinder (2) einerseits und von der Klemmbuchse (24) andererseits begrenzt ist.

16. Wasserhahn nach Anspruch 15, **dadurch gekennzeichnet, dass** das zylindrische Auslaufteil (17) der äußere Zylinder (2) und die Klemmbuchse (24) miteinander fluchtende Außenwandungen aufweisen.

17. Wasserhahn nach einem der Ansprüche 13 bis 16, **dadurch gekennzeichnet, dass** die Klemmbuchse (24) mit einem Innengewinde (26) auf ein Außengewinde (16) der Steuerbuchse (8) geschraubt ist.

18. Wasserhahn nach einem der Ansprüche 13 bis 16, **gekennzeichnet durch** eine Bajonettverbindung zwischen Klemmbuchse (24) und Steuerbuchse (8).

## Claims

1. Water tap for installation in a- mounting orifice present in a mounting plate having a housing which exhibits a housing part present in an installation position above the mounting plate and a securing piece (1) projecting through the mounting plate, through which securing piece there can be passed at least one supply pipe, with a control cylinder (21) inserted into the housing part for the purpose of controlling a quantity of water conducted to an outlet (57) and with an actuating member (41), which is capable of being connected to an actuating element (23) for the control cylinder (21), wherein the housing part is constructed with an external cylinder (2) and a control bush (8), which carries the control cylinder (21) and is inserted removably into the external cylinder (2) and the external cylinder (2) is embodied integrally with the securing piece (1), **characterized in that** an axial outlet orifice of the control cylinder (21) is in alignment with an outlet conduit piece (49) in the control bush (8), wherein the outlet conduit piece (49) of the control cylinder (21) discharges into an annular cavity (13) that is formed in the external wall of the control bush (8), **in that** the control bush (8) is surrounded in a direction radially outwards in the vicinity of the annular cavity (13) by a cylindrical outlet piece (17) with an outlet pipe and seals are inserted, axially to either side of the annular cavity (13) between the control bush (8) and the outlet piece (17), and **in that** the outlet piece (17) is held in downward direction by the external cylinder (2) and in upward direction by a clamping bush (24).

2. Water tap according to Claim 1, **characterized in that** the external cylinder (2) exhibits a cylinder axis (4), which forms an angle α < 180° with a central axis (5) of the securing piece (1).

3. Water tap according to Claim 2, **characterized in that** the angle α lies between 170° and 175°.

4. Water tap according to one of Claims 1 to 3, **characterized in that** the control cylinder (21) is embodied furthermore for mixing flows of water supplied via at least two supply pipes and **in that** the control bush (8) is inserted in the external cylinder (2) in an axially and rotationally secured manner.

5. Water tap according to one of Claims 1 to 4, **characterized in that** the connection between the external cylinder (2) and the control bush (8) is effected by means of at least one projection (9) interacting with a bayonet guide slot (7).

6. Water tap according to Claim 5, **characterized in that** the at least one bayonet guide slot (7) is executed in the inner wall of the external cylinder (2).

7. Water tap according to one of Claims 1 to 6, **characterized in that** at least one through hole (6, 10) is provided in each case to ensure the non-rotating connection between the external cylinder (2) and the control bush (8) in enclosing walls of the external cylinder (2) and of the control bush (8), which are capable of being locked in a mutually aligned position by means of at least one inserted bolt (11).

8. Water tap according to Claim 7, **characterized in that** the bolt (11) is embodied as a snap-in component in a single piece with a locating piece (12) adapted to the external wall of the external cylinder (2).

9. Water tap according to one of Claims 1 to 8, **characterized in that** conduit pieces (47) are formed in the control bush (8) for connection to the supply pipes.

10. Water tap according to Claim 9, **characterized in that** the conduit pieces (47) in the control bush (8) are in axial alignment with inlet orifices in the control cylinder (21}.

11. Water tap according to Claim 10, **characterized in that** a surrounding seal is provided between the conduit pieces (47) and the inlet orifices in each case, which seal absorbs a pre-tension exerted by the clamping bush (24).

12. Water tap according to Claim 11, **characterized in that** the outlet piece (17) is rotatably mounted on the control bush (8).

13. Water tap according to one of Claims 1 to 12, **characterized in that** the clamping bush (24) is designed for the purpose of exerting an axial pre-tension on the control cylinder (21) by means of a rotating movement.

14. Water tap according to Claim 13, **characterized in that** the clamping bush (24) makes contact with the housing part via a radially extended flange section (27) and can be connected to the housing part in a non-rotating manner by means of a bolt (30) via at least one penetration orifice (28) of the flange section (27).

15. Water tap according to Claim 13 or 14, **characterized in that** the outlet piece (17} is delimited axially by the external cylinder (2) on the one hand and by the clamping bush (24) on the other hand.

16. Water tap according to Claim 15, **characterized in that** the cylindrical outlet piece (17), the external cylinder (2) and the clamping bush (24) exhibit external walls that are in mutual alignment with one another.

17. Water tap according to one of Claims 13 to 16, **characterized in that** the clamping bush (24) is screwed via an internal thread (26) onto an external thread (16) of the control bush (8).

18. Water tap according to one of Claims 13 to 16, **characterized by** a bayonet connection between the clamping bush (24) and the control bush (8).

## Revendications

1. Robinet d'eau destiné à être monté dans une ouverture de montage située dans une plaque de montage, comprenant un boîtier qui présente, en position montée, une partie de boîtier située au-dessus de la plaque de montage et un embout de fixation (1) faisant saillie à travers la plaque de montage, à travers laquelle est guidée au moins une conduite d'alimentation, avec un cylindre de commande (21) inséré dans la partie de boîtier pour diriger une quantité d'eau vers une sortie (57), et avec un organe d'actionnement (41) qui peut être relié à un élément d'actionnement (23) du cylindre de commande (21), la partie de boîtier étant constituée par un cylindre extérieur (2) et par un manchon de commande (8) inséré de façon amovible dans le cylindre extérieur (2), et qui porte le cylindre de commande (21), et le cylindre extérieur (2) étant réalisé d'une seule pièce avec l'embout de fixation (1), **caractérisé en ce qu'**une ouverture de sortie axiale du cylindre de commande (21) est alignée avec un tronçon de conduite de sortie (49) du manchon de commande (8), le tronçon de conduite de sortie (49) du cylindre de commande (21) débouchant dans un espace annulaire (13) réalisé dans une paroi extérieure du manchon de commande (8), **en ce que** le manchon de commande (8) est entouré, dans la région de l'espace annulaire (13), radialement vers l'extérieur par une partie de sortie (17) avec un tuyau de sortie, et des joints d'étanchéité sont insérés axialement des deux côtés de l'espace annulaire (13) entre le manchon de commande (8) et la partie de sortie (17), et **en ce que** la partie de sortie (17) est retenue vers le bas par le cylindre extérieur (2) et vers le haut par un manchon de serrage (24).

2. Robinet d'eau selon la revendication 1, **caractérisé en ce que** le cylindre extérieur (2) présente un axe de cylindre (4), qui forme avec un axe médian (5) de l'embout de fixation (1) un angle α < à 180°.

3. Robinet d'eau selon la revendication 1, **caractérisé en ce que** l'angle α est compris entre 170° et 175°.

4. Robinet d'eau selon l'une des revendications 1 à 3, **caractérisé en ce que** le cylindre de commande (21) est réalisé en outre pour mélanger au moins deux courants d'eau circulant dans des conduites d'alimentation, et **en ce que** le manchon de commande (8) est inséré, axialement et de façon fixe en rotation, dans le cylindre extérieur (2).

5. Robinet d'eau selon l'une des revendications 1 à 4, **caractérisé en ce que** la liaison entre le cylindre extérieur (2) et le manchon de commande (8) est assurée au moyen d'au moins une saillie (9) coopérant avec une gorge de guidage (7) de type baïonnette.

6. Robinet d'eau selon la revendication 5, **caractérisé en ce que** ladite au moins une gorge de guidage (7) du type baïonnette est réalisée dans la paroi interne du cylindre extérieur (2).

7. Robinet d'eau selon l'une des revendications 1 à 6, **caractérisé en ce que**, pour assurer la liaison fixe en rotation entre le cylindre extérieur (2) et le manchon de commande (8), au moins un perçage traversant (6, 10) est pratiqué dans chacune des parois d'enveloppe du cylindre extérieur (2) et du manchon de commande (8) qui peuvent être verrouillées lorsqu'elles sont alignées par l'insertion d'au moins une goupille (11).

8. Robinet d'eau selon la revendication 7, **caractérisé en ce que** la goupille (11) est réalisée d'une seule pièce en tant que pièce d'encliquetage avec une pièce d'appui (12) adaptée sur la paroi extérieure du cylindre extérieur (2).

9. Robinet d'eau selon l'une des revendications 1 à 8, **caractérisé en ce que**, dans le manchon de commande (8), sont agencés des tronçons de conduite (47) pour le raccordement aux conduites d'alimentation.

10. Robinet d'eau selon la revendication 9, **caractérisé en ce que** les tronçons de conduite (47) du manchon de commande (8) sont alignés axialement avec des ouvertures d'entrée du cylindre de commande (21).

11. Robinet d'eau selon la revendication 10, **caractérisé en ce que**, entre chacun des tronçons de conduite (47) et les ouvertures d'entrée, est prévue une étanchéité périphérique qui est sollicitée par une précontrainte exercée par le manchon de serrage (24).

12. Robinet d'eau selon la revendication 11, **caractérisé en ce que** la partie de sortie (17) est montée rotative sur le manchon de commande (8).

13. Robinet d'eau selon l'une des revendications 1 à 12, **caractérisé en ce que** le manchon de serrage (24) est agencé pour exercer une précontrainte axiale sur le cylindre de commande (21) grâce à un mouvement de rotation.

14. Robinet d'eau selon la revendication 13, **caractérisé en ce que** le manchon de serrage (24) est appliqué contre la partie de boîtier par une partie de flasque (27) s'étendant radialement et peut être relié à la partie du boîtier au moyen d'au moins une ouverture de passage (28) de la partie de flasque (27) grâce à une goupille (30).

15. Robinet d'eau selon la revendication 13, **caractérisé en ce que** la partie de sortie (17) est limitée axialement, d'une part par le cylindre extérieur (2), et d'autre part, par le manchon de commande (24).

16. Robinet d'eau selon la revendication 15, **caractérisé en ce que** la partie cylindrique de sortie (17) du cylindre extérieur (2) et le manchon de serrage (24) présentent des faces extérieures affleurantes.

17. Robinet d'eau selon l'une des revendications 13 à 16, **caractérisé en ce que** le manchon de serrage (24) est vissé au moyen d'un taraudage interne (26) sur un filetage extérieur (16) du manchon de commande (8).

18. Robinet d'eau selon l'une des revendications 13 à 16, **caractérisé par** une liaison du type baïonnette entre le manchon de serrage (24) et le manchon de commande (8).
